# EUROPÄISCHE PATENTSCHRIFT

(11) **EP 1 312 848 B1**
(45) Veröffentlichungstag und Bekanntmachung des Hinweises auf die Patenterteilung: **07.01.2009**
(21) Anmeldenummer: 01127674.8
(22) Anmeldetag: 20.11.2001
(51) Int. Cl.: F16L 13/11

(54) **Rohrverbindung und Verfahren zur Herstellung einer Rohrverbindung**
Pipe coupling and method to achieve a pipe coupling
Raccord de tuyaux et procédé pour atteindre un raccord de tuyaux

(43) Veröffentlichungstag der Anmeldung: 21.05.2003
(73) Patentinhaber: SIEMENS AKTIENGESELLSCHAFT, 80333 München (DE)
(72) Erfinder: Hoppenz, Andreas, 63067 Offenbach (DE); Steding, Dirk, 63674 Altenstadt (DE)

(56) Entgegenhaltungen:
- US-A- 868 349
- US-A- 3 860 270
- US-A- 4 647 080

## Beschreibung

Die Erfindung betrifft eine Verbindung von mindestens zwei Rohren, wobei diese in Art einer Steckmuffenrohrverbindung zusammengesteckt sind, so dass sich beide Rohre in einem Überlappungsbereich überlappen.

Derartige Rohrverbindungen sind seit langem bekannt, um insbesondere eine längere Rohrleitung, beispielsweise eine Wasserversorgungsleitung oder eine beliebige andere Versorgungsleitung, aus einzelnen Rohren zu bilden.

Um die Rohrleitung gegenüber eines ungewollten Austretens des in ihr zu transportierenden Strömungsmediums zu sichern und einen Eintritt eines sich eventuell außerhalb der Rohrleitung befindlichen Mediums in die Rohrleitung zu verhindern, ist es weiterhin bekannt, im Überlappungsbereich der jeweiligen Rohre Dichtungen zum Verschließen des zwischen den Rohren gebildeten Spalts anzubringen, welche sich beispielsweise als Dichtringe entlang des Umfangs eines der Rohre erstrecken und in eine Nut dieses Rohres eingelegt sind. Auf diese Weise ist das Austreten des Strömungsmediums bzw. das Eintreten eines sich außerhalb der Rohrleitung befindlichen Mediums zumindest erschwert.

Nachteilig dabei ist, dass auf diese Weise zwar eine gewisse Abdichtung der Rohrleitung erreicht ist, die Verbindungsstellen zwischen den Rohren jedoch nicht sehr stabil sind, da wegen des sich zwangsläufig zwischen den Rohren befindlichen Spalts ein Spiel zwischen den Rohren besteht. So kann z.B. eine unbeabsichtigte Bewegung einer derartigen, verlegten Rohrleitung im Bereich der Verbindungsstellen zu einem zumindest teilweisen Lösen der Verbindung und somit zu einer Beschädigung der Rohrleitung führen, so dass diese zumindest undicht wird. Diese Situation kommt sehr häufig bei Baumaßnahmen vor, welche in der Umgebung einer derartigen Rohrleitung durchgeführt werden.

Zur Erhöhung der Stabilität einer Rohrleitung im Bereich der Verbindungsstellen zwischen den Rohren ist es außerdem bekannt, die Rohre mittels mechanischer Kupplungen (z.B. sogenannter "Locking Keys") oder Flansch- oder Laminatverbindungen zu verbinden. Dadurch wird eine gewisse kraftschlüssige Verbindung zwischen den Rohren im Überlappungsbereich erreicht, jedoch sind die genannten Verbindungsarten je nach Ausführungsart empfindlich gegenüber Verdrehung und/oder Bewegungen in Längsrichtung der Rohrleitung, so dass trotz der erhöhten Stabilität eine Beschädigung zu befürchten ist.

Der Erfindung liegt daher die Aufgabe zugrunde, eine Rohrverbindung und ein Verfahren zur Herstellung einer Rohrverbindung anzugeben, welche insbesondere die genannten Nachteile überwindet, leicht und kostengünstig herstellbar bzw. durchführbar sind und sowohl zur Neuausführung einer Rohrleitung, als auch zur Sanierung einer bestehenden Rohrleitung geeignet sind.

Bezüglich der Rohrverbindung wird die Aufgabe erfindungsgemäß gelöst durch eine Rohrverbindung, umfassend wenigstens ein erstes und ein zweites Rohr, wobei an einem Ende des ersten Rohrs angeordneter Teilbereich aufgeweitet und ein an einem weiteren Ende des zweiten Rohres angeordneter weiterer Teilbereich in den Teilbereich des ersten Rohres eingeführt ist, so dass ein Überlappungsbereich des Teilbereiches und des weiteren Teilbereiches in Art einer Steckmuffenrohrverbindung gebildet ist, wobei zwischen dem Teilbereich und dem weiteren Teilbereich ein Spalt gebildet ist und wobei im Überlappungsbereich am zweiten Rohr wenigstens ein Eingabekanal angeordnet ist, über welchen ein fließfähiges Dichtmittel in den Spalt einbringbar ist. Eine solche Verbindung ist z.B. in Dokument US 2001043 beschrieben.

Erfindungsgemäß ist der wenigstens eine Eingabekanal im weiteren Teilbereich des zweiten Rohres an der Innenfläche des zweiten Rohres angeordnet.

Dabei wird das Dichtmittel aus dem Inneren der Rohre über den Eingabekanal in den Spalt eingebracht. Dies ist besonders vorteilhaft dann möglich, wenn die Rohrleitung neu verlegt wird und die Rohre Zug um Zug zusammengefügt werden. An der Außenfläche der Rohre ist dann kein unter Umständen störender Eingabekanal vorhanden und die Oberfläche der so enthaltenen Rohrleitung ist besonders glatt. Eine derartige Verpressung des Dichtmittels 50 von innen ist insbesondere bei großen, "begehbaren" Rohrdurchmessern möglich sowie bei erdverlegten Rohren, welche bereits in das Erdreich eingebettet sind.

Desweiteren ist erfindungsgemäß der wenigstens eine Ausgabekanal im weiteren Teilbereich des zweiten Rohres an der Innenfläche des zweiten Rohres axial beabstandet vom Eingabekanal angeordnet. So erhält man, eine glatte Oberfläche der Rohrverbindung.

Die Erfindung geht dabei von der Überlegung aus, dass der Spalt zwecks Verhinderung des Austritts eines in den Rohren fließenden Strömungsmediums aus der Rohrverbindung durch die Einbringung eines fließfähigen Dichtmittels zuverlässig abgedichtet werden kann. Die Einbringung des Dichtmittels vor dem Zusammenfügen der Rohre ist praktisch nicht möglich, weshalb ein Eingabekanal vorgesehen ist, über welchen das Dichtmittel in den Spalt eingebracht werden kann, nachdem die beiden Rohre zusammengefügt, beispielsweise zusammengesteckt, sind. Auf diese Weise ist sichergestellt, dass der Spalt möglichst vollständig mit Dichtmittel befüllbar ist und die Dichtwirkung dadurch optimal ist. Des Weiteren verhindert das Dichtmittel auch ein unerwünschtes Eindringens eines sich eventuell außerhalb der Rohrverbindung befindlichen Mediums, wenn die Rohrverbindung als Teil einer Rohrleitung verlegt ist.

Vorteilhaft ist im Überlappungsbereich am ersten und/oder am zweiten Rohr eine Anzahl von Eingabekanälen für das Dichtmittel, bevorzugt entlang des Umfangs des ersten und/oder zweiten Rohres angeordnet, so dass der Spalt gleichmäßig mit Dichtmittel, befüllbar ist. Die Dichtwirkung ist so am gesamten Umfang des Überlappungsbereiches gleichmäßig wirksam, vor allem wenn die Eingabekanäle äquidistant angeordnet sind.

In einer weiteren vorteilhaften Ausgestaltung der Erfindung ist im Überlappungsbereich am ersten und/oder zweiten Rohr ein Ausgabekanal angeordnet, über welchen Luft, die sich im Spalt befindet, entweichen kann.

Bei der Einbringung des Dichtmittels in den Spalt wird die Luft aus dem Spalt verdrängt und benötigt eine Möglichkeit zum Entweichen, um den Spalt möglichst vollständig mit Dichtmittel befüllen zu können. Des Weiteren werden durch den Ausgabekanal Lufteinschlüsse im Dichtmittel, welche bei einer fehlenden Möglichkeit zum Entweichen entstehen und die Dichtwirkung des Dichtmittels herabsetzen könnten, zuverlässig vermieden, da die Luft über den Ausgabekanal entweichen kann.

Außerdem gewährleistet der Ausgabekanal ein sehr einfaches, insbesondere nicht kraftaufwändiges, Einbringen des Dichtmittels in den Spalt über den Eingabekanal.

Vorteilhaft ist im Überlappungsbereich am ersten und/oder zweiten Rohr eine Anzahl von Ausgabekanälen, bevorzugt entlang des ersten und/oder zweiten Rohres angeordnet, so dass die im Spalt befindliche Luft gleichmäßig über die Ausgabekanäle entweichen kann; dazu sind die Ausgabekanäle zweckmäßig äquidistant angeordnet. So ist die gleichmäßige Verteilung und kraftarme Einbringung des Dichtmittels in den Spalt über den oder die Eingabekanäle weiter gefördert.

Zweckmäßig sind im Überlappungsbereich zwischen dem ersten und dem zweiten Rohr wenigstens zwei voneinander beabstandete körperliche Dichtungen, bevorzugt Dichtringe, angeordnet, welche sich bevorzugt über den Umfang des ersten und/oder zweiten Rohres erstrecken und in jeweils eine Umfangsnut des ersten und/oder zweiten Rohres eingelegt sind, wobei der wenigstens eine Eingabekanal und der wenigstens eine Ausgabekanal zwischen den wenigstens zwei körperlichen Dichtungen angeordnet sind.

Die körperlichen Dichtungen, welche beispielsweise als Dichtringe ausgebildet sein können, verbessern die Dichtung der Rohrverbindung im Überlappungsbereich. Der Spalt ist nun noch besser gegen unerwünschtes Austreten eines in den Röhren der Rohrverbindung geführten Strömungsmediums gesichert, welches bei dieser Ausführungsform der Erfindung vor dem Austreten noch die durch die körperlichen Dichtungen gebildete Barriere überwenden müsste. So ist ein unerwünschtes Austreten des Strömungsmediums aus dem Überlappungsbereich der Rohre über den Spalt in den Außenbereich der Rohrverbindung praktisch unmöglich. Gleiches gilt ebenfalls für ein unerwünschtes Eintreten eines Mediums in die Rohre der Rohrverbindung.

Es ist auch denkbar, dass eine nahezu beliebige, bereits verlegte Rohrleitung, welche aus Steckmuffenrohrverbindungen aufgebaut ist, nachträglich gemäß der Erfindung ertüchtigt wird. Dazu ist dann zumindest im Überlappungsbereich der Rohre wenigstens ein Eingabekanal für ein fließfähiges Dichtmittel anzubringen, so dass der Spalt im Überlappungsbereich zwischen den Rohren mit dem Dichtmittel befüllbar ist. So kann eine derartige Rohrleitung vorteilhaft verbessert und/oder saniert werden. Auch die Gegenstände der auf die erfindungsgemäße Rohrverbindung rückbezogenen Unteransprüche können bei einer bereits bestehenden Rohrleitung vorteilhaft nachträglich realisiert werden, um eine erfindungsgemäße Rohrleitung zu erhalten.

Bevorzugt ist das Dichtmittel ein aushärtender Kunststoff, bevorzugt ein Epoxydharz-Glasfaser-Gemisch. Ein derartiges Dichtmittel ist aufgrund seiner Fließfähigkeit zum Zeitpunkt des Einbringens in den Spalt sehr einfach handhabbar; es kann z.B. mittels einer Presse in den wenigstens einen Eingabekanal injiziert werden. Dort härtet das Dichtmittel aus, wird stabil und entfaltet seine Dichtwirkung.

Bevorzugt ist mittels des Dichtmittels eine kraftschlüssige Verbindung zwischen dem Teilbereich des ersten Rohres und dem weiteren Teilbereich des zweiten Rohres gebildet.

Zur Erreichung dieses Vorteils ist besonders die Verwendung des zuvor genannten Epoxydharz-Glasfaser-Gemisches als Dichtmittel geeignet. Es sind jedoch auch andere Dichtmittel denkbar.

Durch die kraftschlüssige Verbindung ist die Rohrverbindung im Überlappungsbereich besonders stabil, besonders gegenüber Verdrehen und Ziehen/Stauchen entlang der Längsachse der Rohrverbindung, ohne dass von außen und/oder innen im Überlappungsbereich zusätzliche mechanische Stabilisierungselemente angebracht werden müssen.

Vorteilhaft sind der Teilbereich und der weitere Teilbereich mittels des Dichtmittels wasserdicht verbunden. Wasserdicht soll dabei allgemein bedeuten, dass kein fließfähiges Medium ungewollt über den Spalt in die Rohrverbindung ein- und/oder aus ihr austreten kann.

In einer besonders bevorzugten Ausgestaltung der Erfindung sind die Innenfläche des Teilbereichs des ersten Rohres und/oder die Außenfläche des weiteren Teilbereichs des zweiten Rohres aufgeraut und/oder weisen ein Profil auf.

Auf diese Weise ist die "Anliegefläche" am ersten und/oder zweiten Rohr für das Dichtmittel vergrößert, so dass insbesondere die über das Dichtmittel erreichte kraftschlüssige Verbindung und/oder Dichtwirkung zwischen den Rohren verbessert ist.

Eine erfindungsgemäße Rohrverbindung weist besonders dann eine gute mechanische Festigkeit auf, wenn das erste und/oder zweite Rohr aus einem glasfaserverstärkten Kunststoff bestehen.

Die Erfindung führt außerdem zu einem Verfahren zur Herstellung einer Rohrverbindung zwischen einem ersten Rohr mit einem an dessen einem Ende angeordneten aufgeweiteten Teilbereich und einem zweiten Rohr mit einem weiteren, an einem weiteren Ende des zweiten Rohres angeordneten Teilbereich wobei das erste und/oder das zweite Rohr aus einem aus glasfaserverstärkten Kunststoff besteht, mit folgenden Schritten:
1. Der weitere Teilbereich des zweiten Rohres wird in den Teilbereich des ersten Rohres eingeführt.
2. Über einen im Überlappungsbereich beider Rohre an der Innenfläche des zweiten Rohr angeordneten wenigstens einen Eingabekanal wird ein Dichtmittel in einen Spalt zwischen dem Teilbereich und dem weiteren Teilbereich eingebracht, wobei im Spalt befindliche Luft über mindestens einen im Überlappungsbereich beider Rohre an der Innenfläche des zweiten Rohr angeordneten mindestens einen Ausgabekanal entweicht.
3. Der Ein- und der Ausgabekanal werden verschlossen.

Die für die erfindungsgemäße Rohrverbindung bereits angeführten vorteilhaften Wirkungen gelten sinngemäß auch für das erfindungsgemäße Verfahren. Des Weiteren sind entsprechend den vorteilhaften Ausgestaltungen der erfindungsgemäßen Rohrverbindungen auch entsprechende Ausführungsformen für das Verfahren denkbar. Einige Ausführungsformen des erfindungsgemäßen Verfahrens sind in den zugehörigen Unteransprüchen niedergelegt.

Im Folgenden wird ein Ausführungsbeispiel der Erfindung näher dargestellt. Es zeigt:
- FIG: einen Längsschnitt durch eine erfindungsgemäße Rohrverbindung.

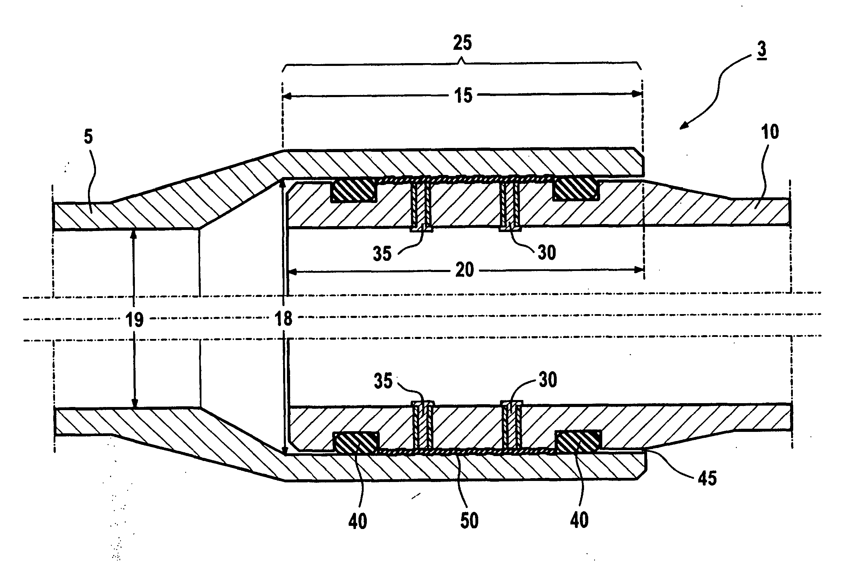

Die Figur zeigt eine erfindungsgemäße Rohrverbindung 3 zwischen einem ersten Rohr 5 und einem zweiten Rohr 10.

Das erste Rohr 5 weist einen aufgeweiteten Teilbereich 15 auf, in welchen ein weiterer Teilbereich 20 des zweiten Rohres 10 eingeführt ist, beispielsweise in Art einer Steckmuffenrohrverbindung. Zwischen dem Teilbereich 15 und dem weiteren Teilbereich 20 ist ein Spalt 45 gebildet.

Der Teilbereich 15 und der weitere Teilbereich 20 überlappen sich in einem Überlappungsbereich 25. In der dargestellten Ausführungsform der Erfindung ist am Umfang des zweiten Rohres 10 bevorzugt äquidistant eine Anzahl von Eingabekanälen 30 angeordnet, welche beispielsweise als Injektionsnippel ausgebildet sind. Über diese Eingabekanäle 30 ist ein Dichtmittel 50 in den Spalt 45 von der Innenfläche des zweiten Rohres 10 her in den Spalt 45 einbringbar, so dass der Spalt 45 durch das Dichtmittel 50 schließbar ist.

Der Teilbereich 15 ist insofern aufgeweitet, als dass der ihm zugeordnete Rohrquerschnitt 18 größer ist als der Rohrquerschnitt 19, welcher auf einen gewünschten Durchfluss hin ausgelegt ist.

Am Umfang des zweiten Rohres 10 sind weiterhin, bevorzugt äquidistant, Ausgabekanäle 35 angeordnet, über welche Luft, welche sich im Spalt 45 befindet, entweichen kann, wenn das Dichtmittel so injiziert wird.

Die Einbringung des Dichtmittels 50 in den Spalt 45 führt zu einer Verdrängung von Luft, welche sich im Spalt 45 befindet. Damit das Dichtmittel 50 besonders leicht und wenig kraftaufwendig in den Spalt 45 einbringbar ist, sind die Ausgabekanäle 35 vorgesehen, über welchen die genannte Luft aus dem Spalt 45 entweichen kann. Auf diese Weise werden ferner unerwünschte Lufteinschlüsse in dem Dichtmittel 50 vermieden. Die Ausgabekanäle 35 sind beispielsweise als Entlüftungsnippel ausgebildet.

Nach Einbringung des Dichtmittels 50 in den Spalt 45 werden die Eingabe- und Ausgabekanäle 30 bzw. 35 verschlossen, beispielsweise mittels die Ein- bzw. Ausgabekanäle abdichtende Kappen. Auf diese Weise ist besonders ein unerwünschtes Austreten von Dichtmittel 50 aus dem Spalt 45 zuverlässig vermieden.

In der gezeigten Ausführungsform einer erfindungsgemäßen Rohrverbindung 3 sind weiterhin im Überlappungsbereich 25 zwei voneinander beabstandete körperliche Dichtungen, bevorzugt Dichtringe, angeordnet. Diese Dichtungen 40 fördern zum einen die Abdichtung des Spalts 45 gegenüber einem unerwünschten Ein- bzw. Austreten eines Strömungsmediums in die bzw. aus der Rohrverbindung und zum anderen begrenzen sie einen Bereich innerhalb des Spalts 45, in welchem das Dichtmittel 50 eingebracht wird. So ist zuverlässig verhindert, dass das Dichtmittel 50 aus dem Spalt 45 sowohl in die Rohrverbindung hinein als auch aus dieser unerwünscht heraus fließt.

Die Rohre 5, 10 bilden eine besonders stabile Rohrverbindung, wenn die Rohre 5, 10 aus glasfaserverstärktem Kunststoff bestehen.

Ein besonders geeignetes Dichtmittel 50 ist z.B. ein Epoxydharz-Glasfaser-Gemisch. Es handelt sich dabei um einen aushärtenden Kunststoff, welcher in fließfähiger Form in den oder die Eingabekanäle 30 injiziert wird und welcher dann im Spalt 45 aushärtet.

Nach Erhärten des Dichtmittels 50 entsteht ein kraftschlüssiger und wasserdichter Verbund zwischen dem Teilbereich 15 des ersten Rohres 5 und dem weiteren Teilbereich des zweiten Rohres 10. Die erfindungsgemäße Rohrverbindung 3 wird dadurch im Überlappungsbereich 25 besonders stabil gegenüber Verdrehung und/oder Krafteinwirkung (Ziehen/Stauchen) in Richtung der Längsachse der Rohrverbindung 3, ohne dass zur Erreichung der Kraftschlüssigkeit mechanische Anbauteile verwendet werden müssen.

Die Kraftschlüssigkeit kann dadurch erhöht werden, dass die Außenfläche des zweiten Rohres 10 im weiteren Teilbereich 20 und/oder die Innenfläche des ersten Rohres 5 im Teilbereich 15 aufgeraut bzw. mit einem Profil versehen wird. Dieses Profil kann von beliebiger Form sein. Durch diese Maßnahmen wird aufgrund der nun vergrößerten Angriffsflächen für das Dichtmittel eine bessere Verzahnung des Dichtmittels 50 mit dem ersten und/oder zweiten Rohr 5, 10 erreicht, wodurch der Verbund zwischen dem ersten und dem zweiten Rohr verbessert und damit die Möglichkeit einer Kraftübertragung vom ersten auf das zweite Rohr bzw. umgekehrt erhöht ist.

Die Ein- und Ausgabekanäle 30, 35 können ferner zur Prüfung der Rohrverbindung auf Dichtheit verwendet werden. Bei einer dichten Rohrverbindung darf aus unverschlossenen Ein- und Ausgabekanälen kein in der Rohrverbindung geführtes Strömungsmedium austreten. Außerdem darf es nicht möglich sein, über die Ein- und Ausgabekanäle von außen ein fließfähiges Medium in den Innenraum der Rohrverbindung einzubringen. Gelingt dies doch, ist mit einer mangelnden Dichtheit der Rohrverbindung zu rechnen und entsprechende Reparaturarbeiten können gezielt eingeleitet werden.

Eine erfindungsgemäße Rohrverbindung kann standardmäßig zum Einsatz kommen und somit herkömmliche aufwendige Systemlösungen zur Abdichtung und Übertragung von Kräften in Rohrverbindungen ersetzen.

Ein weiteres Einsatzgebiet ist die Prävention, d.h. eine vorbeugende zusätzliche Sicherung einer Rohrverbindung gegen mögliche Leckagen, insbesondere bei kritischen Strömungsmedien oder späterer eingeschränkter Zugänglichkeit der Rohrverbindung nach deren Verlegung. Außerdem ermöglicht eine erfindungsgemäße Rohrverbindung die nachträgliche Sanierung einer undichten Rohrverbindung, in dem letztere gemäß den Merkmalen der Erfindung ertüchtigt wird. Eine derartige nachträgliche Sanierung ist besonders vorteilhaft bei solchen Rohrverbindungen möglich, bei welchen zur Abdichtung herkömmliche Dichtringe verwendet sind.

## Patentansprüche

1. Rohrverbindung (3) umfassend wenigstens ein erstes und ein zweites Rohr (5,10), wobei das erste und/oder das zweite Rohr (5,10) aus einem glasfaserverstärkten Kunststoff bestehen, wobei ein an einem Ende des ersten Rohres angeordneter Teilbereich (15) aufgeweitet und ein an einem weiteren Ende des zweiten Rohres (10) angeordneter weiterer Teilbereich (20) des ersten Rohres in den Teilbereich (15) eingeführt ist, so dass ein Überlappungsbereich (25) des Teilbereichs (15) und des weiteren Teilbereichs (20) in Art einer Steckmuffenrohrverbindung gebildet ist, wobei zwischen dem Teilbereich (15) und dem weiteren Teilbereich (20) ein Spalt (45) gebildet ist, wobei im Überlappungsbereich (25) wenigstens ein Eingabekanal (30) angeordnet ist, über welchen ein fließfähiges Dichtmittel (50) in den Spalt (45) einbringbar ist, und wobei im Überlappungsbereich (25) wenigstens ein Ausgabekanal (35) angeordnet ist, über welchen Luft, die sich im Spalt (45) befindet, entweichen kann,
**dadurch gekennzeichnet, dass** der wenigstens eine Eingabekanal (30) und der wenigstens eine Ausgabekanal (35) im weiteren Teilbereich (20) des zweiten Rohres (10) an der Innenfläche des zweiten Rohres (10) angeordnet und voneinander axial beab standet sind.

2. Rohrverbindung nach Anspruch 1,
**dadurch gekennzeichnet, dass** im Überlappungsbereich (25) eine Anzahl von Eingabekanälen (30) entlang des Umfangs des zweiten Rohres (10) für das Dichtmittel (50) angeordnet ist.

3. Rohrverbindung nach Anspruch 1 oder 2,
**dadurch gekennzeichnet, dass** im Überlappungsbereich (25) eine Anzahl von Ausgabekanälen (35), bevorzugt entlang des Umfangs des zweiten Rohres (5,10), für Luft angeordnet ist.

4. Rohrverbindung nach einem der Ansprüche 1 bis 3,
**dadurch gekennzeichnet, dass** im Überlappungsbereich (25) zwischen dem ersten und dem zweiten Rohr (5,10) wenigstens zwei voneinander beabstandete körperliche Dichtungen (40), bevorzugt Dichtringe, angeordnet sind, welche sich bevorzugt über den Umfang des ersten und/oder zweiten Rohres (5,10) erstrecken und in jeweils eine Umfangsnut des ersten und/oder zweiten Rohres (5,10) eingelegt sind, wobei der wenigstens eine Eingabekanal (30) und der wenigstens eine Ausgabekanal (35) zwischen den wenigstens zwei körperlichen Dichtungen (40) angeordnet sind.

5. Rohrverbindung nach einem der Ansprüche 1 bis 4,
**dadurch gekennzeichnet, dass** das Dichtmittel ein aushärtender Kunststoff, bevorzugt ein Epoxydharz-Glasfaser-Gemisch, ist.

6. Rohrverbindung nach einem der Ansprüche 1 bis 5,
**dadurch gekennzeichnet, dass** mittels des Dichtmittels (50) eine kraftschlüssige Verbindung zwischen dem Teilbereich (15) des ersten Rohres (5) und dem weiteren Teilbereich (20) des zweiten Rohres (10) gebildet ist.

7. Rohrverbindung nach einem der Ansprüche 1 bis 6,
**dadurch gekennzeichnet, dass** mittels des Dichtmittels (50) der Teilbereich (15) des ersten Rohres (5) und der weitere Teilbereich (20) des zweiten Rohres (10) wasserdicht verbunden sind.

8. Rohrverbindung nach einem der Ansprüche 1 bis 7,
**dadurch gekennzeichnet, dass** die Innenfläche des Teilbereichs (15) des ersten Rohres (5) und/oder die Außenfläche des weiteren Teilbereichs (20) des zweiten Rohres (10) aufgeraut sind und/oder ein Profil aufweisen.

9. Verfahren zur Herstellung einer Rohrverbindung (3) zwischen einem ersten Rohr (5) mit einem an dessen einem Ende angeordneten aufgeweiteten Teilbereich (15) und einem zweiten Rohr (10) mit einem weiteren an einem weiteren Ende des zweiten Rohres angeordneten Teilbereich (20), wobei das erste und/oder das zweite Rohr (5,10) aus einem glasfaserverstärkten Kunststoff bestehen,
**gekennzeichnet durch** folgende Schritte
a) der weitere Teilbereich (20) des zweiten Rohres (10) wird in den Teilbereich (15) des ersten Rohres (5) eingeführt,
b) über einen im Überlappungsbereich (25) beider Rohre (5,10) an der Innenfläche des zweiten Rohrs (10) angeordneten wenigstens einen Eingabekanal (30) wird ein Dichtmittel (50) in einen Spalt (45) zwischen dem Teilbereich (15) und dem weiteren Teilbereich (20) eingebracht, wobei im Spalt (45) befindliche Luft über mindestens einen im Überlappungsbereich (25) beider Rohre (5,10) an der Innenfläche des zweiten Rohrs (5,10) angeordneten Ausgabekanal (35) entweicht und
c) der Eingabekanal (30) und der Ausgabekanal (35) werden verschlossen.

10. Verfahren nach Anspruch 9, wobei das Dichtmittel (50) ein aushärtender Kunststoff, bevorzugt ein Epoxydharz-Glasfaser-Gemisch ist.

11. Verfahren nach Anspruch 10, wobei durch das Dichtmittel (50) eine kraftschlüssige und/oder wasserdichte Verbindung zwischen dem ersten und dem zweiten Rohr (5,10) hergestellt wird.

## Claims

1. Pipe joint (3) comprising at least a first and a second pipe (5, 10), the first and/or the second pipe (5, 10) being made of a glass-fiber-reinforced plastic, a section (15) arranged at an end of the first pipe being opened out and a further section (20) arranged at a further end of the second pipe (10) being inserted into the section (15), so that an overlap region (25) of the section (15) and of the further section (20) is formed like a push-in bell-and-spigot pipe joint, a gap (45) being formed between the section (15) and the further section (20), at least one input passage (30) being arranged in the overlap region (25), via which input passage (30) a free-flowing sealing medium (50) can be introduced into the gap (45), and at least one output passage (35) being arranged in the overlap region (25), via which output passage (35) air which is located in the gap (45) can escape, **characterized in that** the at least one input passage (30) and the at least one output passage (35) is arranged in the further section (20) of the second pipe (10) on the inner surface of the second pipe (10) and are axially spaced apart.

2. Pipe joint as claimed in Claim 1, **characterized in that** a number of input passages (30) are arranged in the overlap region (25) along the circumference of the second pipe (10), for the sealing medium (50).

3. Pipe joint as claimed in Claim 1 or 2, **characterized in that** a number of output passages (35) are arranged in the overlap region (25), preferably along the circumference of the second pipe (5, 10), for air.

4. Pipe joint as claimed in one of Claims 1 to 3, **characterized in that** at least two spaced-apart physical seals (40), preferably sealing rings, are arranged in the overlap region (25) between the first and the second pipe (5, 10), which seals (40) preferably extend over the circumference of the first and/or second pipe (5, 10) and are each inserted into a circumferential groove of the first and/or second pipe (5, 10), the at least one input passage (30) and the at least one output passage (35) being arranged between the at least two physical seals (40).

5. Pipe joint as claimed in one of Claims 1 to 4, **characterized in that** the sealing medium is a curable plastic, preferably an epoxy-resin/glass-fiber mixture.

6. Pipe joint as claimed in one of Claims 1 to 5, **characterized in that** a frictional connection is formed between the section (15) of the first pipe (5) and the further section (20) of the second pipe (10) by means of the sealing medium (50).

7. Pipe joint as claimed in one of Claims 1 to 6, **characterized in that** the section (15) of the first pipe (5) and the further section (20) of the second pipe (10) are connected in a watertight manner by means of the sealing medium (50).

8. Pipe joint as claimed in one of Claims 1 to 7, **characterized in that** the inner surface of the section (15) of the first pipe (5) and/or the outer surface of the further section (20) of the second pipe (10) is/are roughened and/or has/have a profile.

9. Method of producing a pipe joint (3) between a first pipe (5) having an opened-out section (15) arranged at its one end and a second pipe (10) having a further section (20) arranged at a further end of the second pipe, the first and/or the second pipe (5, 10) being made of a glass-fiber-reinforced plastic, **characterized by** the following steps
a) the further section (20) of the second pipe (10) is inserted into the section (15) of the first pipe (5),
b) a sealing medium (50) is introduced into a gap (45) between the section (15) and the further section (20) via at least one input passage (30) arranged in the overlap region (25) of both pipes (5, 10) on the inner surface of the second pipe (10), air located in the gap (45) escaping via at least one output passage (35) arranged in the overlap region (25) of both pipes (5, 10) on the inner surface of the second pipe (5, 10), and
c) the input passage (30) and the output passage (35) are closed.

10. Method as claimed in Claim 9, the sealing medium (50) being a curable plastic, preferably an epoxy-resin/glass-fiber mixture.

11. Method as claimed in Claim 10, a frictional and/or watertight connection being formed between the first and the second pipe (5, 10) by the sealing medium (50).

## Revendications

1. Système de raccordement ( 3 ) de tubes comprenant au moins un premier et un deuxième tube ( 5, 10 ), système
dans lequel le premier et/ou le deuxième tube ( 5, 10 ) sont réalisés en une matière plastique renforcée de fibres de verre,
dans lequel une zone partielle ( 15 ) disposée à une extrémité du premier tube est évasée, et une autre zone partielle ( 20 ) disposée à une autre extrémité du deuxième tube ( 10 ) est insérée dans la zone partielle ( 15 ) du premier tube, de façon à former une zone de chevauchement ( 25 ) de la zone partielle ( 15 ) et de l'autre zone partielle ( 20 ) à la manière d'un système de raccordement de tubes par manchon,
dans lequel un interstice ( 45 ) est formé entre la zone partielle ( 15 ) et ladite autre zone partielle ( 20 ),
dans lequel dans la zone de chevauchement ( 25 ) est disposé au moins un canal d'introduction ( 30 ), par l'intermédiaire duquel un moyen d'étanchéité ( 50 ) pouvant s'écouler librement peut être introduit dans l'interstice ( 45 ),
et dans lequel dans la zone de chevauchement ( 25 ) est disposé au moins un canal de sortie ( 35 ) par l'intermédiaire duquel de l'air, qui se trouve dans l'interstice ( 45 ), peut s'évacuer,
**caractérisé en ce que** le canal d'introduction ( 30 ) et le canal de sortie ( 35 ), chacun au moins au nombre de un, sont disposés dans ladite autre zone partielle ( 20 ) du deuxième tube ( 10 ), au niveau de la surface intérieure du deuxième tube ( 10 ), et sont espacés axialement les uns des autres.

2. Système de raccordement de tubes selon la revendication 1,
**caractérisé en ce que** dans la zone de chevauchement ( 25 ) sont disposés un certain nombre de canaux d'introduction ( 30 ) du moyen d'étanchéité ( 50 ), le long de la périphérie du deuxième tube ( 10 ).

3. Système de raccordement de tubes selon la revendication 1 ou 2,
**caractérisé en ce que** dans la zone de chevauchement ( 25 ) sont disposés un certain nombre de canaux de sortie ( 35 ) pour l'air, de préférence le long de la périphérie du deuxième tube ( 10 ).

4. Système de raccordement de tubes selon l'une des revendications 1 à 3,
**caractérisé en ce que** dans la zone de chevauchement ( 25 ) entre le premier et le deuxième tube ( 5, 10 ), sont disposés au moins deux joints d'étanchéité ( 40 ) solides espacés axialement, de préférence des bagues ou anneaux d'étanchéité, qui s'étendent de préférence le long de la périphérie du premier et/ou du deuxième tube ( 5, 10 ), et sont placés respectivement dans une rainure périphérique du premier et/ou du deuxième tube ( 5, 10 ), le canal d'introduction ( 30 ) au moins au nombre de un et le canal de sortie ( 35 ) au moins au nombre de un étant disposés entre au moins les deux joints d'étanchéité ( 40 ) solides.

5. Système de raccordement de tubes selon l'une des revendications 1 à 4,
**caractérisé en ce que** le moyen d'étanchéité est une matière plastique thermodurcissable, de préférence un mélange de résine époxy et de fibres de verre.

6. Système de raccordement de tubes selon l'une des revendications 1 à 5,
**caractérisé en ce qu'**à l'aide du moyen d'étanchéité ( 50 ), est formée une liaison à complémentarité de force entre la zone partielle ( 15 ) du premier tube ( 5 ) et ladite autre zone partielle ( 20 ) du deuxième tube ( 10 ).

7. Système de raccordement de tubes selon l'une des revendications 1 à 6,
**caractérisé en ce qu'**à l'aide du moyen d'étanchéité ( 50 ), la zone partielle ( 15 ) du premier tube ( 5 ) et ladite autre zone partielle ( 20 ) du deuxième tube ( 10 ) sont reliées de manière étanche à l'eau.

8. Système de raccordement de tubes selon l'une des revendications 1 à 7,
**caractérisé en ce que** la surface intérieure de la zone partielle ( 15 ) du premier tube ( 5 ) et/ou la surface extérieure de ladite autre zone partielle ( 20 ) du deuxième tube ( 10 ), sont rendues rugueuses et/ou présentent un profil.

9. Procédé pour fabriquer un système de raccordement ( 3 ) de tubes entre un premier tube ( 5 ) comportant une zone partielle ( 15 ) évasée disposée à l'une de ses extrémités, et un deuxième tube ( 10 ) comportant une autre zone partielle ( 20 ) disposée à une autre extrémité du deuxième tube, le premier et/ou le deuxième tube ( 5, 10 ) étant réalisés en une matière plastique renforcée de fibres de verre,
**caractérisé par** les étapes suivantes :
a) on introduit ladite autre zone partielle ( 20 ) du deuxième tube ( 10 ) dans la zone partielle ( 15 ) du premier tube ( 5 ),
b) on introduit un moyen d'étanchéité ( 50 ) dans un interstice ( 45 ) entre la zone partielle ( 15 ) et ladite autre zone partielle ( 20 ), par l'intermédiaire d'au moins un canal d'introduction ( 30 ) disposé dans la zone de chevauchement ( 25 ) des deux tubes ( 5, 10 ), au niveau de la surface intérieure du deuxième tube ( 10 ), de l'air, qui se trouve dans l'interstice ( 45 ), s'évacuant par l'intermédiaire d'au moins un canal de sortie ( 35 ) disposé dans la zone de chevauchement ( 25 ) des deux tubes ( 5, 10 ), au niveau de la surface intérieure du deuxième tube ( 10 ), et
c) on ferme le canal d'introduction ( 30 ) et le canal de sortie ( 35 ).

10. Procédé selon la revendication 9, d'après lequel le moyen d'étanchéité ( 50 ) est une matière plastique thermodurcissable, de préférence un mélange de résine époxy et de fibres de verre.

11. Procédé selon la revendication 10, d'après lequel est établie, à l'aide du moyen d'étanchéité ( 50 ), une liaison par complémentarité de force et/ou étanche à l'eau entre le premier et le deuxième tube ( 5, 10 ).
